(19) Europäisches Patentamt
European Patent Office
Office européen des brevets

(11) Publication number: **0 423 402 A1**

(12) # EUROPEAN PATENT APPLICATION

(21) Application number: **89310658.3**

(22) Date of filing: **17.10.89**

(51) Int. Cl.5: **C08J 5/18**, C08K 7/18, C08K 3/22, C08K 3/36, B41M 5/40, B41N 1/24, H01G 4/20

(43) Date of publication of application: **24.04.91 Bulletin 91/17**

(84) Designated Contracting States: **DE FR GB**

(71) Applicant: **TEIJIN LIMITED**
**6-7, Minamihonmachi 1-chome Chuo-ku**
**Osaka-shi Osaka 541(JP)**

(72) Inventor: **Katoh, Kotaro**
**6-16-25, Seishin**
**Sagamihara-shi Kanagawa-ken(JP)**
Inventor: **Tomita, Hiroshi**
**1-4-9, Yokoyama**
**Sagamihara-shi Kanagawa-ken(JP)**
Inventor: **Saitoh, Kazuyoshi**
**1-12-19, Komaci-dohri**
**Sagamihara-shi Kanagawa-ken(JP)**

(74) Representative: **Myerscough, Philip Boyd et al**
**J.A.Kemp & Co. 14, South Square Gray's Inn**
**London, WC1R 5EU(GB)**

(54) **Thermoplastic polymeric film.**

(57) A thermoplastic polymeric film having a thickness of 0.1 to 4 micrometers prepared from an intimate mixture comprising

(A) 100 parts by weight of a thermoplastic polymer,

(B) 0.01 to 3 parts by weight of inert secondary agglomerated inorganic particles having an average particle diameter of 0.05 to 5 micrometers and a void ratio of 50 to 95 % which are aggregates of primary fine particles having an average particle diameter of 30 to 500 angstrom, and

(C) 0.005 to 1 part by weight of spherical primary particles selected from silica particles, silicone resin particles, crosslinked polystyrene resin particles and crosslinked acrylic resin particles, and having an average particle diameter of 0.05 to 4 micrometers and an aspect ratio of from 1.0 to 1.2.

EP 0 423 402 A1

## THERMOPLASTIC POLYMERIC FILM

This invention relates to a thermoplastic polymer film. More specifically, it relates to an ultrathin film useful, for example, as a dielectric material of a film capacitor, a master sheet for thermal stencil printing or a receptor sheet for a thermal transfer printer.

Thermoplastic polymeric films typified by a polyester film, have found extensive applications as, for example, a magnetic recording tape, a packaging film, and a material for capacitors and electrically insulating materials because of their excellent mechanical properties, thermal properties and thermal resistance.

For example, with the recent requirements for size reduction of electrical or electronic circuits, it has been a quality requisite to provide a capacitor of a small size and large capacity. Attempts have therefore been made to form a thin thermoplastic polymeric film as a dielectric material of such capacitors. The reason for the thickness reduction of a thermoplastic polymeric film as a dielectric material of a film capacitor is that the electrostatic capacity of the capacitor is proportional to the dielectric constant of the dielectric material and the electrode area, and is inversely proportional to the thickness of the film. In other words, since the electrostatic capacity of the dielectric material per unit volume is inversely proportional to the square of the thickness of the film and proportional to the dielectric constant of the dielectric material, if a dielectric material of the same dielectric constant is used, it is essential to reduce the thickness of the film in order to obtain a capacitor of a smller size and a larger capacity.

In thermal stencil printing, a film used as a master must be perforated with a low energy in order to meet the requirements of high-speed plate-making and size reduction of the plate-making and printing machines. The thickness reduction of the film used in this application is becoming increasingly necessary since this can result in a smaller thermal capacity per unit area.

Likewise, in the thermal transfer printing process involving providing an ink layer on one surface of a thermoplastic polymeric film typified by a polyester film, heating the other surface of the film, and thus melting or subliming the ink layer by the heat transferred to the other surface of the film, and transferring it to a receptor sheet, it is necessary to increase the heat conduction of the receptor sheet in order to realize high-speed printing and size reduction of the thermal transfer printer. The thickness reduction of the thermoplastic polymer film is an effective means for achieving this.

Mere reduction of the thickness of a conventional stretched film gives rise to the following problems.

For example, when the film is to be used as a dielectric material of a capacitor, operations required in vaccum-depositing an electrode on the film, film slitting, and element winding of film capacitors become difficult. Further, in preparing a master sheet for thermal stensil printing, operations required in a step of bonding the film and a porous support with an adhesive are difficult.

It is known that the difficulty of such operations has to do with the slipperiness of the film, and the film slipperiness may be improved by providing fine raisings and depressions on the surface of the film. It is known that to provide such fine raisings and depressions on the film surface, inert fine inorganic particles are added during or after the synthesis of a thermoplastic polymer as a material for the film (external particle addition method), or a catalyst and other materials used at the time of synthesizing a thermoplastic polymer are partly or wholly precipitated onto the polymer in a reaction step (interior particle precipitation method).

When a film having a thickness of 4 micrometers or below is to be produced by using a polymer composition in which the concentration of the inert fine inorganic particles is suitable for production of thicker films, the number of the inert fine inorganic particles per unit area tends to decrease and the distances among protrusions on the film surface tend to increase and the protrusions tends to be flattened. Accordingly, to prevent degradation of slipperiness of the film owing to the flattening, it is necessary to increase the concentration of the inert fine inorganic particles or to increase the particle diameter of the particles as the thickness of the film decreases. However, when the concentration of the particles or their particle diameter is increased, voids frequently occur around the inert fine particles because the inert fine inorganic particles have poor affinity for the thermoplastic polymer particularly at the time of melt-extrusion or stretching of a polymer with a high draft ratio. The occurrence of such voids extremely degrades the mechanical properties (such as break strength and break elongation) or the dielectric breakdown voltage of the film. Furthermore, breakage tends to occur during film production, and new problems such as the reduction of productivity and the lack of stability of the production conditions arise.

U. S. Patent No. 4,818,581 discloses a biaxially oriented polyester film formed from an intimate mixture comprising (1) an aromatic polyester and (2) 0.01 to 4 % by weight of spherical fine particles of silica having an average particle diameter of 0.05 to 4 micrometers, an aspect ratio of from 1.0 to 1.2 and a

relative deviation standard of particle size of up to 0.5.

Japanese Laid-Open Patent Publication No. 43450/1987 discloses a polyester composition comprising a polyester and porous inert fine inorganic particles having a void ratio of at least 50 % and an average particle diameter of 0.2 to 1.5 microns. It discloses that the polyester composition gives a film having improved travelling shavability in which the interfacial peeling between the polymer and the fine particles does not easily occur. Specifically, it only discloses a film having a thickness of 15 micrometers.

Japanese Laid-Open Patent Publication No. 95339/1987 discloses a polyester composition comprising a polyester, porous inert fine inorganic particles having a void ratio of 50 to 95 % and an average particle diameter of 0.05 to 3 microns and non-porous inner fine inorganic particles having an average particle diameter of 0.05 to 3 microns. This patent document states that the above polyester composition gives a film having the same properties as the film described in Japanese Laid-Open Patent Publication No. 43450/1987, and film scraps recovered may be re-used to give a film having satisfactory surface properties. Again, this patent document specifically discloses only a film having a thickness of 15 microns.

It is an object of this invention to provide a self-supporting ultrafine film having good handlability formed from a specific composition having excellent film-formability.

Another object of this invention is to provide an ultrathin film which because of the above properties, is suitable for use as a dielectric material of a capacitor, a master sheet for thermal stencil printing, or a receptor sheet for a thermal transfer printer.

Other objects of the invention along with its advantages will become apparent from the following description.

According to this invention, the above objects and advantages are achieved by a thermoplastic polymeric film having a thickness of 0.1 to 4 micrometers prepared from an intimate mixture comprising

(A) 100 parts by weight of a thermoplastic polymer,

(B) 0.01 to 3 parts by weight of inert secondary agglomerated inorganic particles having an average particle diameter of 0.05 to 5 micrometers and a void percentage of 50 to 95 % which are aggregates of primary fine particles having an average particle diameter of 30 to 500 angstrom, and

(C) 0.005 to 1 part by weight of spherical primary particles selected from silica particles, silicone resin particles and crosslinked polystyrene resin particles and having an average particle diameter of 0.05 to 4 micrometers and an aspect ratio of from 1.0 to 1.2.

The thermoplastic polymer (A) used in this invention preferably shows a plastic flow when heated, and is of a chemical structure composed mainly of a linear high-molecular-weight polymer (A). Examples of the thermoplastic polymer (A) include polyesters, polyphenylene sulfides, polyamides, polysulfones and polyvinylidene fluoride. Of these, the polyesters and polyphenylene sulfides are preferred.

As the polyesters, aromatic polyesters such as polyethylene 2,6-naphthalene dicarboxylate and polyethylene terephthalate are preferred. As required, known additives such as stabilizers, coloring agents and antioxidants may be incorporated in the thermoplastic polymers in an amount of not more than 1 % by weight.

The particles as the other component of the film of this invention are secondary aggregated inorganic particles and spherical primary particles. These particles together give many fine protrusions to the surface of the film of this invention serve to give the above-mentioned excellent properties to the film of this invention.

The secondary agglomerated fine particles used in this invention are aggregates of fine primary particles having a particle diameter of 30 to 500 angstrom. These secondary agglomerated fine particles should have an average particle diameter of 0.05 to 5 micrometers and a void percentage of 50 to 95 %.

The void ratio can be calculated from the true specific gravity and pore volume of the primary fine particles. If the void percentage is less than 50 %, the affinity of the secondary agglomerated fine particles for the thermoplastic polymer as substrate is not sufficient, and when it is formed into a film, voids are liable to form between the fine particles and the thermoplastic polymer. If the void percentage exceeds 95 %, the particles are difficult of retaining their secondary particle shape, and are liable to disintegrate into the primary fine particles.

Preferably, the void percentage of the particles is 60 to 90 %, especially 70 to 80 %.

It is not clearly known why the secondary agglomerated fine particles used in this invention show high affinity for the thermoplastic polymer. Presumably, this is partly because the thermoplastic polymer is penetrated and included into the voids of the fine particles.

The secondary agglomerated fine particles further have an average particle diameter of 0.05 to 5 micrometers to obtain particles having a predetermined average particle diameter, particle adjusting methods known heretofore may be used. For example, by subjecting the particles to a pulverization treatment, a classifying operation, etc., the particles are preferably adjusted to a predetermined average

particle diameter and a predeter mined particle size distribution. The term "average particle diameter" means the "equivalent spherical diameter" of particles existing at a point of 50 % by weight of the entire measured particles. The "equivalent spherical diameter" denotes the diameter of a phantom sphere (ideal sphere) having the same volume as the particle, and can be calculated from the results of measurement of particles by electron micrograph of the particles or by an ordinary sedimentation method. If the average particle is less than 0.05 micrometer, creases are liable to form in the film at the time cf wounding it up in roll form on a master roll or a product roll because it has poor air sqeezing property (air entrained does not readily escape). Furthermore, it has insufficient slipperiness, and its processability in a processing step is reduced. If, on the other hand, the average particle diameter of the secondary agglomerated fine particles exceeds 5 micrometers, the surface of the film is excessively roughened, the dielectric breakdown voltage is lowered and insulation defects increase. The average particle diameter of the secondary agglomerated fine particles can be larger than the thickness of the final film in this invention, and this gives rise to no problem. Preferably, the secondary agglomerated fine particles (B) are substantially free from coarse particles having a particle diameter of more than about 10 micrometers, and have a sharp distribution on the fine particle size side.

The secondary agglomerated fine particles (B) have high affinity for the thermoplastic polymer. In the steps of extrusion and stretching, they deform without disintegration and spread in the film in parallel to the film surface. This is believed to be the reason why the film formability of the intimate mixture used in this invention is not reduced.

The average particle diameter of the secondary agglomerated fine particles (B) is preferably 0.1 to 4 micrometers, especially preferably 0.2 to 3.5 micrometers.

The secondary agglomerated fine particles (B) used in this invention are composed of primary fine particles having an average particle diameter of 30 to 500 angstrom, and this particle size is conductive to the effect of the invention described above.

The secondary agglomerated fine particles (B) are, for example, alumina, silica, silica-alumina, titania or zirconia.

The secondary agglomerated fine particles having the above properties used in this invention may be formed, for example, by dispersing inorganic primary particles of, for example, silica in water to form colloidal particles, and drying the sol to form secondary agglomerated fine particles (porous gels). A typical production method that can be applied is disclosed, for example, in Japanese Laid-Open Patent Publication No. 52876/1977.

The content of the secondary agglomerated fine particles (B) in the intimate mixture is 0.01 to 3 % by weight per 100 parts by weight of the thermoplastic polymer (A). If its content is less than 0.01 parts by weight, the air squeezing property of the resulting film at the time of wind up is poor. On the other hand, if it exceeds 3 parts by weight, the film surface is excessively roughened, and the dielectric breakdown voltage of the film is decreased. The preferred content of the secondary agglomerated fine particles (B) is 0.05 to 2 parts by weight, especially 0.1 to 1.5 parts by weight, on the same basis.

The spherical primary particles (C) used in this invention have an average particle diameter of 0.05 to 4 micrometers and an aspect ratio of from 1.0 to 1.2. The spherical primary particles (C) are either silica particles, silicone resin particles, crosslinked polystyrene resin particles, or crosslinked acrylic resin particles, preferably the silica particles. The individual primary particles (C) are spherical very close to a true sphere, and are very different from ultrafine lumpy particles having a particle size of about 10 micrometers of silica or agglomerated particles having a particle diameter of about 0.5 micrometer resulting from agglomeration of these lumpy particles.

Preferably, the average particle diameter of the spherical primary particles (C) is not larger than the thickness of the film. More specifically, the average particle diameter of the spherical primary particles (C) is preferably 0.2 to 3 micrometers, especially preferably 0.3 to 2 micrometers, so long as it does not exceed the thickness of the film.

If the average particle diameter of the spherical primary particles (C) is less than 0.05 micrometer, the resulting film has insufficient slipperiness and undesirably suffers from reduced operability in a processing step. If it exceeds 4 micrometers, the surface of the film is excessively roughened, and the dielectric breakdown voltage is decreased and insulation defects increase. Furthermore, the particle diameter ratio of the spherical primary particles is preferably from 1.0 to 1.15, especially preferably from 1.0 to 1.1.

Preferably, the spherical primary particles has a sharp particle size distribution, and has a relative standard deviation, expressing the steepness of the particle diameter distribution, of not more than 0.5, more preferably not more than 0.3, and especially not more than 0.1. The relative standard deviation $\delta$ is expressed by the following equation.

$$\delta = \frac{\sqrt{\sum_{i=1}^{n} (D_i - \bar{D})^2 / n}}{\bar{D}}$$

wherein $D_i$ is the diameter (µm) of the equivalent circular area of each of the particles, $\bar{D}$ is an average value (µm) of the diameter of the equivalent circular area defined by the following equation

$$\bar{D} = \sum_{i=1}^{n} D_i / n$$

and n is the number of the particles, with the proviso that the diameter of the equivalent circular area denotes the diameter of each particle calculated when it is assumed that each particle is of a true spherical shape.

When spherical primary particles having a relative standard deviation of not more than 0.5 are used, the heights of large protrusions on the film surface are very uniform because the particles are spherical and their particle size distribution is very steep. The individual protrusions on the film surface have a very sharp shape because the voids around the lubricant are small. Hence, even if the number of protrusions is the same, the film surface has better slipperiness than when other slip agents are used.

So long as the spherical primary particles meet the aforesaid conditions, they are not limited in other respect including the method of their production. For example, spherical silica particles can be produced by hydrolyzing ethyl ortho-silicate [$Si(OC_2H_5)_4$] to prepare monodisperse particles of hydrous silica [$Si(OH)_4$], and subjecting the monodisperse particles of hydrous silica to a dehydration treatment to grow silica bonds [≡Si-O-Si≡] three-dimentionally (Journal of Chemical Society of Japan, '81, No. 9, p. 1503).

$Si(OC_2H_5)_4 + 4H_2O \rightarrow Si(OH)_4 + 4C_2H_5OH$ ≡Si-OH + HO-Si≡ → ≡Si-O-Si≡ + $H_2O$

The silicone resin particles, crosslinked polystyrene resin particles and crosslinked acrylic resin particles are commercially available under the brands of, for example, Tospearl XC-99-620 of Toshiba Silicone Co., Ltd., Monodisperse Polymer Particles MMP S2461(R)-03 of Japan Synthetic Rubber Co., Ltd. and Acrylic Ultrafine Powder MP series of Soken Chemical Co., Ltd.

The content of the spherical primary particles (C) is 0.005 to 1 part by weight per 100 parts by weight of the thermoplastic polymer (A). If their content is less than 0.005 part by weight, the resulting film has insufficient slipperiness. On the other hand, if their content exceeds 1 part by weight, the film formability of the intimate mixture and the mechanical strength and dielectric breakdown voltage of the resulting film are undesirably degraded. Preferably, the content of the spherical primary particles is 0.01 to 0.80 part by weight, especially 0.02 to 0.60 part by weight, on the same basis.

If in the present invention, the content of the secondary agglomerated fine inorganic particles (B) and/or the spherical particles (B) is too low, the synergistic effect of using two types of particles cannot be obtained, and air squeezing property at the time of film winding or the slipperiness of the film during processing becomes insufficient.

The thermoplastic polymeric film of this invention is formed from an intimate mixture comprising the thermoplastic polymer (A), the secondary agglomerated inorganic particles (B) and the spherical primary particles (C) in the above-specified proportions.

The intimate mixture can be produced, for example, by adding the secondary agglomerated inorganic particles (B) and the spherical primary particles (C) to the polymerization system before the completion of polymerization for preparation of the thermoplastic polymer (A), and then completing the polymerization. If the thermoplastic polymer (A) is a polyester, it is preferred to add these particles to the reaction system before the end of the ester-interchange reaction or esterification reaction (preferably as a slurry in a glycol).

Alternatively, the intimate mixture may be prepared by producing the thermoplastic polymer (A) containing the secondary agglomerated inorganic particles (B) and the thermoplastic polymer containing the spherical primary particles (C) separately, and blending these polymers.

The resulting intimate mixture may be molded into a film by methods known per se .

For example, the intimate mixture, alone or with a thermoplastic polymer, is melt-molded into an amorphous unstretched film, and the film is optionally stretched monoaxially or biaxially, optionally heat-set and optionally heat-treated under relaxation.

The stretching conditions such as the stretch ratio, the stretching temperature and the stretching speed,

and the heat-setting and relaxation heat-treatment conditions may be easily adjusted to conditions which gives optimal surface properties, density and thermal shrinkage of the resulting film by performing repeated experiments.

For example, when the thermoplastic polymer is a polyester, the stretching temperature $T_1$ in the first-stage stretching (for example, stretching in the machine direction) may be selected from the range of (Tg - 10) to (Tg + 45) °C (Tg is the glass transition point of the polyester), and the stretching temperature $T_2$ in the second stretching (for example, in the transverse direction) may be selected from ($T_1$ + 15) to ($T_1$ + 40) °C. The stretch ratio may be at least 2.5, preferably at least 3 in one direction with an area ratio of at least 8 times, preferably at least 10 times. Advantageously, the heat-setting temperature may be 130 to 250 °C, especially 180 to 230 °C.

Thus, the present invention provides an ultrathin film having a thickness of 0.1 to 4 micrometers, preferably 0.2 to 3 micrometers. The film of this invention include both unstretched and stretched films.

The ultrathin thermoplastic polymeric film of this invention contains less voids than conventional thermoplastic polymeric films. That the voids around the secondary agglomerated fine particles are small is presumably because the inorganic fine particles have good affinity for the thermoplastic polymer and a large void percentage and are liable to deform, and therefore, the deformation of these particles reduces the concentration of stresses on the periphery of the slip agent at the time of film formation, particularly during stretching. That the voids around the spherical primary particles are small is presumably because the spherical primary particles have good affinity for the thermoplastic polymer and are very closed to a true sphere, and therefore at the time of film formation, particularly during stretching, stresses around the slip agent propagate evenly, and are not concentrated locally on the interface between the thermoplastic polymer and the slip agent. Since the occurrence of voids in the ultrathin thermoplastic polymeric film of this invention is very little as stated above, the film of this invention has increased dielectric breakdown voltage and mechanical strength over conventional films.

Accordingly, the ultrathin film of this invention can be advantageously used, for example, as a dielectric material of a film capacitor, a master sheet for thermal stencil printing and a receptor sheet for a thermal transfer printer.

The following examples further illustrate the present invention.

Various properties in this invention are defined, measured or calculated by the following methods.

(1) Void percentage (%)

The pore volume of particles is measured by the mercury-helium method, and the void percentage is calculated from the pore volume and the specific gravity of the particles in accordance with the following equation.

$$\text{Void percentage (\%)} = \frac{\text{pore volume}}{(1/\text{specific gravity}) + \text{pore volume}} \times 100$$

(2) Particle diameter of particles

(2-1) Spherical silica particles

The particle diameter of particles is measured in the following two modes.

(A) Measurement of the average particle diameter, particle diameter ratio, etc. of particles of a powder

On a sample stand of an electron microscope, the powder is spread in such a manner as to minimize overlaying of the individual particles. By a gold sputtering device, a gold film was vacuum-deposited on the surface of these particles in a thickness of 200 to 300 angstrom. The coated particles were observed under

a scanning electron microscope at a magnification of 10,000 to 30,000 X. By using Luzex 500 (made by Japan Regulator Co., Ltd.), the long diameter ($D_{\ell i}$), short diameter ($D_{si}$) and circular area equivalent diameter ($D_i$) of at least 100 particles were measured. The long diameter ($D_\ell$), short diameter ($D_s$) and average particle diameter ($\bar{D}$ ) of the particles are expressed by number average values represented by the following equations.

$$D_\ell = (\sum_{i=1}^{n} D_{\ell i})/n, \quad D_s = \sum_{i=1}^{n} D_{si})/n,$$

$$\bar{D} = (\sum_{i=1}^{n} D_i)/n$$

(B) Measurement of the average particle diameter, the particle diameter ratio, etc. of particles in the film:-

A small sample piece of the film is fixed to a sample stand for a scanning electron microscope, and ion etching is performed on the surface of the sample film under the following conditions by means of a sputtering device (JFC-1100 type ion etching device made by Nippon Denshi Co., Ltd.). Specifically, the sample is set in a bell jar, and the degree of vacuum is raised to about $10^{-3}$ torr. Ion etching is carried out at a voltage of 0.25 KV and a current of 12.5 mA for about 10 minutes. Furthermore, in the same device gold sputtering is carried out on the film surface. The coated film is then observed with a scanning electron microscope at a magnification of 10,000 to 30,000 X. The long diameters ($D_{\ell i}$), short diameters ($D_{si}$) and diameters ($D_i$) of the equivalent circular area of at least 100 particles are measured by means of Luzex 500 (made by Japan Regulator Co., Ltd.). Thereafter, the same procedure as in (A) above is taken.

(2-2) Secondary agglomerated inert inorganic particles

The particles are subjected to a centrifugal particle size analyzer (Model CP-50 made by Shimazu Seisakusho Co., Ltd.). From the cumulative curve of particles of the individual diameters and their amounts calculated on the basis of the resulting centrifugal sedimentation curve, a particle diameter corresponding to a 50 mass percent is read and defined as the average particle diameter of the particles (see "Particle Size Measuring Technique", pages 242-247, 1975, published by Nikkan Kogyo Press).

(3) Aspect ratio

A small piece of the film is fixed and molded into a rod shape having a diameter of about 5 mm by using an epoxy resin and an ultrathin slice having a thickness of about 600 angstrom is prepared by means of a microtome. The inert fine particles existing in the cut section of the sample film are observed under a transmission-type electron microscope (model H-800 made by Hitachi Limited) at an acceleration voltage of 100 KV. The long diameter and short diameter of the particles are determined, and the aspect ratio is calculated.

Twenty particles are observed, and the particle diameter of each particle is calculated. The average values of the aspect ratio is defined as the aspect ratio.

(4) Relative standard deviation (inert secondary agglomerated particles)

The differential particle size distribution is determined from the cumulative curve obtained in paragraph (2-2).

The relative standard deviation is calculated in accordance with the following equation.

$$\text{Relative standard deviation } (\sigma) = \sqrt{\sum_{i=1}^{n} (D_i - \bar{D})^2 \phi_i} \;/ \bar{D}$$

wherein $D_i$ is the particle diameter ($\mu$m) determined in paragraph (1) above, $\bar{D}$ is the average particle diameter ($\mu$m) determined in paragraph (1) above, n is the number of divisions used in determining the cumulative curve in paragraph (1), and $\phi_i$ is the probability of existence of particles of the individual particle sizes (mass percent).

(5) Inherent viscosity ([$\eta$])

Measured at 25 °C using o-chlorophenol as a solvent. The unit is 100 cc/g.

(6) Thickness of the thermoplastic polymeric film

The thickness t (micrometers) of the film is calculated in accordance with the following equation.

$$T = \frac{G}{W \cdot \ell \cdot d} \times 1000$$

wherein W is the width (cm) of the film, $\ell$ is the length (cm) of the film, G is the weight (grams) of the film sampled with the above width and length, and d is the density (g/cm$^3$) of the film.

(7) Film surface roughness

This is a centerline average roughness (Ra) defined in JIS-8060. In this invention, it is measured by using a non-contact three-dimensional microfigure measuring instrument with a high-precision optical stylus (ET-30HK made by Kosaka Kenkyusho Co., Ltd.). The measuring conditions are as follows.

(a) Laser: semiconductor laser wavelength 780 nm
(b) Laser beam diameter: 11.6 micrometers
(c) Cutoff: 0.25 mm
(d) Measured length ($L_x$): 1 mm

The profiles of the protrusions on the film surface are measured under conditions involving an enlarging ratio 10000 in the machine direction, an enlarging ratio of 200 in the transverse direction, a scanning number of 100 (therefore, the measuring length in the Y-direction, Ly = 0.2 mm). Let the roughness curved surface of the film surface be Z = f(x,y), the film surface roughness (Ra in micrometers) is defined by the following equation.

$$Ra = \frac{1}{L_x \times L_y} \int_0^{L_x} \int_0^{L_y} |f(x,y)| \, dxdy$$

The protruding height at a point where the area ratio from the reference level is 70 % is regarded as being of a 0-level, and the height of a protrusion is defined as the difference between it and the protruding height at the 0-level. The number of protrusions corresponding to this height is read.

(8) Slipperiness

The coefficient of static friction ($\mu$s) and the coefficient of dynamic friction ($\mu$d) are measured by using a slip tester in accordance with the method of ASTM-D-1894B-63.

(9) Break strength

A sample with a width of 10 mm and a length of 15 cm is cut off from the film. The sample is pulled by a universal tensile tester of the instron type at a pulling speed of 100 mm/min. and a chuck speed of 100 mm/min. The stress at which the film sample is broken is measured.

(10) Dielectric breakdown voltage

Measured by the method described in JIS-C-2318, and an average value (n = 100) is used.

(11) Void ratio

The parts surrounding the slip in the surface of the film agent are exposed in acordance with the method of (B), (2-1) of paragraph (2) above, and the long diameters of at least 50 solid fine particles and the long diameters of voids are measured. The void ratio is defined by the quotient obtained by dividing the long diameter of a void by the long diameter of solid fine particles, and expressed as a number average value.

(12) Film formability

It is expressed by the number of film breakages which occur when the film is continuously produced for 8 hours. The unit is therefore times/8 hours. An ultrathin film is susceptible to breakage. However, practical use of the film is difficult unless this value is usually not more than 2 times/8 hours.

(13) Handlability

This property is evaluated by the state of crease occurrence in a biaxially stretched film on a roll of the film conveying system and the state of winding on a winder or slitter.
O : No crease at all
Δ : Occasionally creases occur but soon disappear
X : Creases always form, and remained as folded creases in the final product

(14) Overall evaluation

The film formability, handling property, dielectric breakdown voltage and break strength are evaluated comprehensively, and rated as follows:-
◎ : Good in all these items
O : Slightly inferior in these items, but no problem in practical use
Δ : Problems exist in practical use
X : Cannot withstand practical use

EXAMPLES 1-16 AND COMPARATIVE EXAMPLES 1-9

In each run, the slip agents (particles) shown in Table 1 were added at the start of polymerization for preparation of polyethylene-2,6-naphthalenedicarboxylate (PEN for short), and the polymerization was completed in a customary manner to give PEN having an inherent viscosity of 0.85. Pellets of PEN obtained were dried at 170 °C for 4 hours, and fed into a hopper of an extruder and melted at a temperature of 290 to 310 °C. The molten polymer was cast through a slit die with a degree of opening of 0.6 mm onto a rotating drum (surface finish: about 0.3S; surface temperature: 60 °C) to obtain an unstretched film. The unstretched film was stretched to 3.9 times in the machine direction at 135 °C, then conducted to a tenter, and stretched transversely to 4.0 times at 140 °C. The stretched film was heat-treasted at 220 °C for 5

seconds to give a heat-set biaxially oriented film.

The properties of the film are shown in Table 1.

Table 1

| | | | Comparative Example 1 | Comparative Example 2 | Comparative Example 3 | Example 1 | Example 2 | Example 3 |
|---|---|---|---|---|---|---|---|---|
| Film thickness (μm) | | | 2.0 | 1.3 | 1.0 | 3.5 | 2.0 | 1.3 |
| Particles added | Particles (A) | Kind of particles | Calcium carbonate | ← | ← | Porous silica | ← | ← |
| | | Void percentage (%) | 0 | ← | ← | 75 | ← | ← |
| | | Average particle diameter (μm) | 1.2 | ← | ← | 3.5 | ← | ← |
| | | Aspect ratio | 1.3 | ← | ← | 10 | ← | ← |
| | | Relative standard deviation | 0.5 | ← | ← | 0.5 | ← | ← |
| | | Amount added (wt.%) | 0.50 | ← | ← | 0.60 | ← | ← |
| | Particles (B) | Kind of particles | kaolin | ← | ← | Spherical silica | ← | ← |
| | | Void percentage (%) | 5 | ← | ← | 0 | ← | ← |
| | | Average particle diameter (μm) | 0.9 | ← | ← | 0.5 | ← | ← |
| | | Aspect ratio | 10 | ← | ← | 1.1 | ← | ← |
| | | Relative standard deviation | 0.7 | ← | ← | 0.2 | ← | ← |
| | | Amount added (wt.%) | 0.25 | ← | ← | 0.30 | ← | ← |

<u>Note</u> The symbol ← shows that the figure is the same as the left line.

- to be continued -

Table 1 (continued)

| | | Comparative Example 1 | Comparative Example 2 | Comparative Example 3 | Example 1 | Example 2 | Example 3 |
|---|---|---|---|---|---|---|---|
| Properties | Film foamability | 0 | 1 | 5 | 0 | 0 | 0 |
| | Handling property | ○ | △ | X | ○ | ○ | ○ |
| | Surface roughness (nm) | 42 | 33 | 28 | 110 | 95 | 75 |
| | Dielectric breakdown voltage (KW/mm) | 350 | 300 | 280 | 420 | 400 | 360 |
| | Slipperiness (μs/μd) | 0.53/0.45 | 0.61/0.49 | 0.67/0.55 | 0.37/0.35 | 0.40/0.36 | 0.42/0.39 |
| | Void ratio (A/B) | 2.0/1.7 | 2.0/1.7 | 2.0/1.7 | 1.2/1.1 | 1.2/1.1 | 1.2/1.1 |
| | Break strength ($kg/mm^2$) machine/transverse | 23/21 | 21/20 | 19/19 | 25/23 | 25/22 | 24/22 |
| | Ovverall evaluation | ○ | △ | X | ◎ | ◎ | ◎ |

- to be continued -

Table 1 (continued)

| | | | Example 4 | Example 5 | Comparative Example 4 | Example 6 | Example 7 | Comparative Example 5 |
|---|---|---|---|---|---|---|---|---|
| Film thickness (μm) | | | 0.8 | 0.5 | 0.3 | 1.3 | ← | ← |
| Particles added | Particles (A) | Kind of particles | Porous silica | ← | ← | ← | ← | ← |
| | | Void percentage (%) | 75 | ← | ← | 60 | 90 | 45 |
| | | Average particle diameter (μm) | 3.5 | ← | ← | ← | ← | ← |
| | | Aspect ratio | 10 | ← | ← | 7 | 13 | 3 |
| | | Relative standard deviation | 0.5 | ← | ← | ← | ← | ← |
| | | Amount added (wt.%) | 0.60 | ← | ← | ← | ← | ← |
| | Particles (B) | Kind of particles | Spherical silica | ← | ← | ← | ← | ← |
| | | Void percentage (%) | 0 | ← | ← | ← | ← | ← |
| | | Average particle diameter (μm) | 0.5 | ← | ← | ← | ← | ← |
| | | Aspect ratio | 1.1 | ← | ← | ← | ← | ← |
| | | Relative standard deviation | 0.2 | ← | ← | ← | ← | ← |
| | | Amount added (wt.%) | 0.30 | ← | ← | ← | ← | ← |

- to be continued -

Table 1 (continued)

| | | Example 4 | Example 5 | Comparative Example 4 | Example 6 | Example 7 | Comparative Example 5 |
|---|---|---|---|---|---|---|---|
| Properties | Film foamability | 0 | 2 | frequent breakage | 1 | 0 | frequent breakage |
| | Handling property | ○ | △ | △ | ○ | ○ | ○ |
| | Surface roughness (nm) | 52 | 45 | 35 | 83 | 65 | 88 |
| | Dielectric breakdown voltage (KW/mm) | 310 | 280 | 240 | 330 | 370 | 300 |
| | Slipperiness ($\mu$s/$\mu$d) | 0.54/0.47 | 0.59/0.53 | 0.62/0.56 | 0.46/0.43 | 0.40/0.38 | 0.50/0.45 |
| | Void ratio (A/B) | 1.2/1.1 | 1.2/1.1 | 1.2/1.1 | 1.3/1.1 | 1.1/1.1 | 1.6/1.1 |
| | Break strength (kg/mm$^2$) machine/transverse | 23/22 | 20/20 | 18/18 | 22/20 | 25/22 | 18/17 |
| | Overall evaluation | ○ | △ | X | △ | ◎ | X |

- to be continued -

Table 1 (continued)

| | | | Example 8 | Example 9 | Comparative Example 6 | Example 10 | Comparative Example 7 | Comparative Example 8 |
|---|---|---|---|---|---|---|---|---|
| Film thickness (μm) | | | 1.3 | ← | ← | 0.3 | 1.3 | ← |
| Particles added | Particles (A) | Kind of particles | Pores silica | ← | ← | ← | ← | |
| | | Void percentage (%) | 75 | ← | ← | ← | ← | |
| | | Average particle diameter (μm) | 3.5 | ← | ← | ← | ← | |
| | | Aspect ratio | 10 | ← | ← | ← | ← | |
| | | Relative standard deviation | 0.5 | ← | ← | ← | ← | |
| | | Amount added (wt.%) | 0.60 | ← | ← | ← | ← | |
| | Particles (B) | Kind of particles | Spherical silica | ← | ← | ← | | Spherical silica |
| | | Void percentage (%) | 0 | ← | ← | ← | | 0 |
| | | Average particle diameter (μm) | 0.8 | 1.3 | 1.6 | 0.25 | | 0.5 |
| | | Aspect ratio | 1.1 | 1.2 | ← | ← | | 1.1 |
| | | Relative standard deviation | 0.2 | ← | ← | ← | | 0.2 |
| | | Amount added (wt.%) | 0.30 | ← | ← | ← | | 0.30 |

- to be continued -

Table 1 (continued)

| | | Example 8 | Example 9 | Comparative Example 6 | Example 10 | Comparative Example 7 | Comparative Example 8 |
|---|---|---|---|---|---|---|---|
| Properties | Film foamability | 0 | 3 | frequent breakage | 1 | 0 | 0 |
| | Handling property | ○ | ○ | △ | ○ | △ | △ |
| | Surface roughness (nm) | 81 | 93 | 105 | 70 | 65 | 31 |
| | Dielectric breakdown voltage (KW/mm) | 360 | 320 | 300 | 360 | 370 | 370 |
| | Slipperiness (μs/μd) | 0.45/0.41 | 0.51/0.50 | 0.59/0.53 | 0.56/0.48 | 0.51/0.49 | 0.40/0.35 |
| | Void ratio (A/B) | 1.2/1.1 | 1.2/1.2 | 1.2/1.2 | 1.2/1.1 | 1.2/— | —/1.1 |
| | Break strength ($kg/mm^2$) machine/transverse | 24/22 | 20/19 | 18/17 | 22/21 | 24/22 | 24/22 |
| | Overall evaluation | ◎ | △ | X | ○ | △ | △ |

- to be continued -

Table 1 (continued)

| | | | Example 11 | Example 12 | Example 13 | Comparative Example 9 | Example 14 | Example 15 |
|---|---|---|---|---|---|---|---|---|
| Film thickness (μm) | | | 1.3 | 0.8 | 0.5 | 0.3 | ← | 1.3 |
| Particles added | Particles (A) | Kind of particles | Porous silica | ← | ← | ← | ← | Porous alumina |
| | | Void percentage (%) | 75 | ← | ← | ← | ← | 70 |
| | | Average particle diameter (μm) | 3.5 | ← | ← | ← | ← | ← |
| | | Aspect ratio | 10 | ← | ← | ← | ← | 9 |
| | | Relative standard deviation | 0.5 | ← | ← | ← | ← | 0.7 |
| | | Amount added (wt.%) | 0.60 | ← | ← | ← | ← | ← |
| | Particles (B) | Kind of particles | Spherical silicon | ← | ← | ← | ← | Spherical silica |
| | | Void percentage (%) | 0 | ← | ← | ← | ← | ← |
| | | Average particle diameter (μm) | 0.7 | ← | ← | ← | 0.3 | 0.8 |
| | | Aspect ratio | 1.2 | ← | ← | ← | ← | 1.1 |
| | | Relative standard deviation | 0.2 | ← | ← | ← | ← | ← |
| | | Amount added (wt.%) | 0.15 | ← | ← | ← | ← | 0.30 |

- to be continued -

Table 1 (continued)

| | | Example 11 | Example 12 | Example 13 | Comparative Example 9 | Example 14 | Example 15 |
|---|---|---|---|---|---|---|---|
| Properties | Film foamability | 0 | 0 | 2 | frequent breakage | 1 | 0 |
| | Handling property | ○ | ○ | △ | △ | △ | ○ |
| | Surface roughness (nm) | 78 | 54 | 47 | 36 | 32 | 83 |
| | Dielectric breakdown voltage (KW/mm) | 370 | 320 | 280 | 230 | 260 | 340 |
| | Slipperiness (μs/μd) | 0.49/0.44 | 0.59/0.51 | 0.62/0.55 | 0.70/0.64 | 0.68/0.60 | 0.48/0.42 |
| | Void ratio (A/B) | 1.2/1.0 | 1.2/1.0 | 1.2/1.0 | 1.2/1.0 | 1.2/1.0 | 1.4/1.1 |
| | Break strength ($kg/mm^2$) machine/transverse | 25/23 | 23/22 | 19/19 | 18/17 | 20/19 | 22/22 |
| | Overall evaluation | ◎ | ○ | △ | x | △ | ◎ |

Table 1 (continued)

| | | | Example 16 |
|---|---|---|---|
| Film thickness (μm) | | | 1.3 |
| Particles added | Particles (A) | Kind of particles | Porous titanina |
| | | Void percentage (%) | 80 |
| | | Average particle diameter (μm) | 3.5 |
| | | Aspect ratio | 12 |
| | | Relative standard deviation | 0.6 |
| | | Amount added (wt.%) | 0.60 |
| | Particles (B) | Kind of particles | Spherical silica |
| | | Void percentage (%) | 0 |
| | | Average particle diameter (μm) | 0.8 |
| | | Aspect ratio | 1.1 |
| | | Relative standard deviation | 0.2 |
| | | Amount added (wt.%) | 0.30 |

- to be continued -

Table 1 (continued)

| Properties | | Example 16 |
|---|---|---|
| | Film foamability | O |
| | Handling property | ○ |
| | Surface roughness (nm) | 80 |
| | Dielectric breakdown voltage (KW/mm) | 350 |
| | Slipperiness (μs/μd) | 0.47/0.43 |
| | Void ratio (A/B) | 1.3/1.1 |
| | Break strength ($kg/mm^2$) machine/transverse | 23/22 |
| | Overall evaluation | ◎ |

EXAMPLES 17-27 AND COMPARATIVE EXAMPLES 10-13

In each run, the slip agents (particles) shown in Table 2 were added at the start of polymerization for preparation of polyethylene terephthalate (PET for short), and the polymerization was completed in a customary manner to give PET having an inherent viscosity of 0.62. Pellets of PET obtained were dried at 170 °C for 3 hours, and fed into a hopper of an extruder and melted at a temperature of 280 to 300 °C. The molten polymer was cast through a slit die with a degree of opening of 0.6 mm onto a rotating drum (surface finish: about 0.3S; surface temperture: 20 °C) to obtain an unstretched film. The unstretched film was stretched to 3.7 times in the machine direction at 95 °C, then conducted to a tenter, and stretched transversely to 4.2 times at 90 °C. The stretched film was heat-treasted at 230 °C for 5 seconds to give a heat-set biaxially oriented film.

The properties of the film are shown in Table 2.

Table 2

| | | | Comparative Example 10 | Comparative Example 11 | Comparative Example 12 | Example 17 | Example 18 | Example 19 |
|---|---|---|---|---|---|---|---|---|
| Film thickness (μm) | | | 1.7 | 1.3 | 1.0 | 3.0 | 2.0 | 1.3 |
| Particles added | Particles (A) | Kind of particles | Calcium carbonate | ← | ← | Porous silica | ← | ← |
| | | Void percentage (%) | 0 | ← | ← | 75 | ← | ← |
| | | Average particle diameter (μm) | 1.2 | ← | ← | 1.7 | ← | ← |
| | | Aspect ratio | 1.3 | ← | ← | 10 | ← | ← |
| | | Relative standard deviation | 0.5 | ← | ← | 0.5 | ← | ← |
| | | Amount added (wt.%) | 0.60 | ← | ← | 0.20 | ← | ← |
| | Particles (B) | Kind of particles | kaolin | ← | ← | Spherical silica | ← | ← |
| | | Void percentage (%) | 5 | ← | ← | 0 | ← | ← |
| | | Average particle diameter (μm) | 0.9 | ← | ← | 0.8 | ← | ← |
| | | Aspect ratio | 10 | ← | ← | 1.1 | ← | ← |
| | | Relative standard deviation | 0.7 | ← | ← | 0.2 | ← | ← |
| | | Amount added (wt.%) | 0.10 | ← | ← | 0.50 | ← | ← |

Note The symbol ← shows that the figure is the same as the left line.

- to be continued -

Table 2 (continued)

| | | Comparative Example 10 | Comparative Example 11 | Comparative Example 12 | Example 17 | Example 18 | Example 19 |
|---|---|---|---|---|---|---|---|
| Properties | Film foamability | 0 | 1 | 3 | 0 | 0 | 0 |
| | Handling property | △ | X | X | ○ | ○ | ○ |
| | Surface roughness (nm) | 37 | 29 | 25 | 78 | 66 | 52 |
| | Dielectric breakdown voltage (KW/mm) | 370 | 320 | 290 | 420 | 400 | 370 |
| | Slipperiness (μs/μd) | 0.69/0.56 | >1/>1 | >1/>1 | 0.42/0.38 | 0.43/0.39 | 0.49/0.43 |
| | Void ratio (A/B) | 1.9/1.7 | 1.9/1.7 | 1.9/1.7 | 1.2/1.1 | 1.2/1.1 | 1.2/1.1 |
| | Break strength ($kg/mm^2$) machine/transverse | 17/24 | 16/23 | 15/20 | 21/26 | 19/24 | 17/23 |
| | Ovverall evaluation | △ | X | X | ◎ | ◎ | ◎ |

- to be continued -

Table 2 (continued)

| | | Comparative Example 20 | Comparative Example 21 | Comparative Example 13 | Example 22 | Example 23 | Example 24 |
|---|---|---|---|---|---|---|---|
| Properties | Film foamability | 0 | 1 | 3 | 1 | 0 | 1 |
| | Handling property | ○ | △ | △ | △ | ○ | ○ |
| | Surface roughness (nm) | 47 | 43 | 36 | 31 | 50 | 56 |
| | Dielectric breakdown voltage (KW/mm) | 340 | 300 | 270 | 270 | 380 | 360 |
| | Slipperiness (μs/μd) | 0.62/0.47 | 0.85/0.68 | >1/>1 | 0.93/0.78 | 0.52/0.46 | 0.54/0.47 |
| | Void ratio (A/B) | 1.2/1.1 | 1.2/1.1 | 1.2/1.1 | 1.2/1.1 | 1.2/1.0 | 1.2/1.0 |
| | Break strength ($kg/mm^2$) machine/transverse | 16/21 | 15/20 | 14/18 | 15/19 | 17/23 | 16/23 |
| | Ovverall evaluation | ○ | △ | X | △ | ◎ | ○ |

- to be continued -

Table 2 (continued)

| | | Comparative Example 20 | Comparative Example 21 | Comparative Example 13 | Example 22 | Example 23 | Example 24 |
|---|---|---|---|---|---|---|---|
| Properties | Film foamability | 0 | 1 | 3 | 1 | 0 | 1 |
| | Handling property | ○ | △ | △ | △ | ○ | ○ |
| | Surface roughness (nm) | 47 | 43 | 36 | 31 | 50 | 56 |
| | Dielectric breakdown voltage (KW/mm) | 340 | 300 | 270 | 270 | 380 | 360 |
| | Slipperiness (μs/μd) | 0.62/0.47 | 0.85/0.68 | >1/>1 | 0.93/0.78 | 0.52/0.46 | 0.54/0.47 |
| | Void ratio (A/B) | 1.2/1.1 | 1.2/1.1 | 1.2/1.1 | 1.2/1.1 | 1.2/1.0 | 1.2/1.0 |
| | Break strength ($kg/mm^2$) machine/transverse | 16/21 | 15/20 | 14/18 | 15/19 | 17/23 | 16/23 |
| | Ovverall evaluation | ○ | △ | X | △ | ◎ | ○ |

- to be continued -

Table 2 (continued)

| | | | Example 25 | Example 26 | Example 27 |
|---|---|---|---|---|---|
| Film thickness ( m) | | | 1.3 | ← | ← |
| Particles added | Particles (A) | Kind of particles | Porous silica | ← | ← |
| | | Void percentage (%) | 75 | ← | ← |
| | | Average particle diameter ( m) | 1.7 | ← | ← |
| | | Aspect ratio | 10 | ← | ← |
| | | Relative standard deviation | 0.5 | ← | ← |
| | | Amount added (wt.%) | 0.20 | ← | ← |
| | Particles (B) | Kind of particles | Spherical silicon | Spherical crosslinked polystyrene | Spherical crosslinked acrylic resin |
| | | Void percentage (%) | 0 | ← | ← |
| | | Average particle diameter ( m) | 1.9 | 0.8 | ← |
| | | Aspect ratio | 1.2 | ← | 1.1 |
| | | Relative standard deviation | 0.2 | ← | 0.3 |
| | | Amount added (wt.%) | 0.25 | ← | 0.30 |

- to be continued -

Table 2 (continued)

| Properties | Example 25 | Example 26 | Example 27 |
|---|---|---|---|
| Film foamability | 2 | 0 | 0 |
| Handling property | ○ | ○ | ○ |
| Surface roughness (nm) | 60 | 55 | 48 |
| Dielectric breakdown voltage (KW/mm) | 360 | 340 | 380 |
| Slipperiness ($\mu s/\mu d$) | 0.60/0.52 | 0.55/0.48 | 0.50/0.45 |
| Void ratio (A/B) | 1.2/1.1 | 1.2/1.4 | 1.2/1.2 |
| Break strength ($kg/mm^2$) machine/transverse | 16/21 | 16/23 | 17/22 |
| Ovverall evaluation | △ | ◎ | ◎ |

## Claims

1. A thermoplastic polymeric film 0.1 to 4 micrometers thick of an intimate mixture comprising
   (A) 100 parts by weight of a thermoplastic polymer,
   (B) 0.01 to 3 parts by weight of inert secondary agglomerated inorganic particles having an average particle diameter of 0.05 to 5 micrometers and a void ratio of 50 to 95% which are aggregates of primary fine particles having an average particle diameter of 3 to 50 nm (30 to 500 Angstrom), and
   (C) 0.005 to 1 part by weight of spherical primary particles selected from silica particles, silicone resin particles, crosslinked polystyrene resin particles and crosslinked acrylic resin particles, and having an average particle diameter of 0.05 to 4 micrometers and an aspect ratio of from 1.0 to 1.2.
2. A film according to claim 1 in which the thermoplastic polymer (A) is an aromatic polyester.
3. A film according to claim 2 in which the aromatic polyester is polyethylene-2,6-naphthalene diacarboxylate or polyethylene terephthalate.
4. A film according to claim 1, 2 or 3 in which the secondary agglomerated inorganic particles (B) are of alumina, silica, silica-alumina, titania or zirconia.
5. A film according to any one of the preceding claims in which the secondary agglomerated inorganic particles (B) have an average particle diameter of 0.1 to 4 micrometers.
6. A film according to any one of the preceding claims in which the secondary agglomerated inorganic particles (B) have a void percentage of 60 to 90%.
7. A film according to any one of the preceding claims in which the amount of the secondary agglomerated

inorganic particles (B) is 0.05 to 2 parts by weight.

8. A film according to any one of the preceding claims in which the spherical primary particles (C) have an average particle diameter of 0.2 to 3 micrometers.

9. A film according to any one of the preceding claims in which the spherical primary particles (C) have an aspect ratio of from 1.0 to 1.15.

10. A film according to any one of the preceding claims in which the amount of the spherical primary particles (C) is 0.01 to 0.8 part by weight.

11. A film according to any one of the preceding claims in which the spherical primary particles (C) have a relative standard deviation (δ) of particle size, defined by the following equation

$$\delta = \frac{\sqrt{\sum_{i=1}^{n} (D_i - \bar{D})^2 / n}}{\bar{D}}$$

wherein $D_i$ is the diameter (μm) of the equivalent circular area of each of the particles, $\bar{D}$ is an average value (μm) of the diameter of the equivalent circular area defined by the following equation

$$\bar{D} = \sum_{i=1}^{n} D_i / n$$

and n is the number of the particles, with the proviso that the diameter of the equivalent circular area denotes the diameter of each particle calculated when it is assumed that each particle is of a true spherical shape, of up to 0.5.

12. A film according to any one of the preceding claims which is 0.2 to 3 micrometers thick.

13. Use of a film as claimed in any one of the preceding claims as a dielectric material of a film capacitor, as a master sheet for thermosensitive screen printing or as a receptor material for a thermal transfer printer.

European Patent Office

# EUROPEAN SEARCH REPORT

Application Number

EP 89 31 0658

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 257 611 (DIAFOIL CO.)<br>* Claims 1-5,34-40 *<br>--- | 1-3,8-13 | C 08 J 5/18<br>C 08 K 7/18<br>C 08 K 3/22<br>C 08 K 3/36<br>B 41 M 5/40<br>B 41 N 1/24<br>H 01 G 4/20 |
| A | EP-A-0 311 426 (TORAY INDUSTRIES)<br>* Claims 1-7 *<br>--- | 1-3 | |
| A | EP-A-0 225 631 (DIAFOIL CO.)<br>* Claims 1-6 *<br>--- | 1-4,12,13 | |
| A | EP-A-0 133 141 (RHONE-POULENC)<br>* Claims 1-10 *<br>--- | 1-3 | |
| A | EP-A-0 229 670 (TEIJIN)<br>* Claims 1-11 *<br>--- | 1 | |
| D,A | EP-A-0 261 430 (TEIJIN)<br>* Claims 1-12 *<br>--- | 1-13 | |
| A | EP-A-0 307 475 (TORAY INDUSTRIES)<br>* Claims 1-4 *<br>----- | 1,13 | |
| | | | **TECHNICAL FIELDS SEARCHED (Int. Cl.5)** |
| | | | C 08 J<br>C 08 K<br>B 41 N |

The present search report has been drawn up for all claims

| Place of search | Date of completion of the search | Examiner |
|---|---|---|
| THE HAGUE | 19-06-1990 | DECOCKER L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)